# EUROPEAN PATENT APPLICATION

(11) **EP 4 851 788 A1**
(43) Date of publication of application: **09.12.2026**
(21) Application number: 25181156.8
(22) Date of filing: 05.06.2025
(51) Int. Cl.: G06F 8/72, G06F 8/75, G06F 8/40, G06F 9/46

(54) **COMPUTER-IMPLEMENTED METHOD AND CORRESPONDING SYSTEM FOR TRANSFORMING NOTEBOOK-BASED CODE INTO A MODULAR, WELL-STRUCTURED AND PRODUCTION-READY CODEBASE BY USING MULTIPLE LLM-BASED AGENTS**

(71) Applicant: Siemens Aktiengesellschaft, 80333 München (DE)
(72) Inventor: Elhashemy, Hanya, 85375 Neufahrn b. Freising (DE); Lotfy, Youssef, 81549 München (DE); Tang, Yongjian, 80636 München (DE)
(74) Representative: Siemens Patent Attorneys

(57) **Abstract**

The invention relates to a computer-implemented method and corresponding system for transforming notebook-based code into a modular, well-structured and production-ready codebase by using orchestrated multiple LLM-based agents (14), wherein each agent (24, 34, 35) is dedicated to tasks particularly such as architecture design, code refactoring, and directory structuring, and operates based upon the output of its predecessor by exchanging results of the output through a shared dependency tree derived from static code analysis of the notebook-based code, whereby the final output of the transformation process is said modular, well-structured and production-ready codebase (15) functionally equivalent to the notebook-based code.

## Description

The invention relates to a computer-implemented method and corresponding system for transforming notebook-based code into a modular, well-structured and production-ready codebase by using multiple LLM-based agents.

### BACKGROUND OF THE INVENTION

Central to the data science workflow is the use of notebook-based environments such as Jupyter Notebook [1] and Google Colab [2], which offer intuitive interfaces for rapid experimentation, visualization, and code execution.

While these tools have democratized access to machine learning and data analysis, they also introduce technical debt when projects evolve beyond prototyping. Their structure, composed of independent code and text cells, fosters flexibility in exploration and presentation. However, their widespread use in exploratory programming introduces significant software engineering challenges, including poor modularity, limited reproducibility, and fragile execution environments. In notebooks, however, dependencies are frequently encoded through shared global state, such as variables, making it difficult to track which cells must be re-executed when others are modified. This issue is further complicated by the lack of persistent identifiers for cells. Several systems aim to restore or visualize dependencies in notebook workflows.

It is an issue that data science notebooks shall be envolved from loosely structured experimentation tools into reproducible, maintainable, and collaborative computational narratives.

Standalone LLMs such as GPT-3.5 and GPT-4 have demonstrated promising capabilities in localized refactoring tasks, particularly in simplifying control flow, removing redundant operations, and enhancing code readability.

Generative artificial intelligence (generative Al, GenAl, or GAI) or Large Language Model (LLM) is a language model that is characterized by its ability to understand and generate language for general purposes. LLMs acquire these skills by learning statistical relationships from very large sets of text documents during a computationally intensive self-supervised and semi-supervised training process. LLMs are so-called neural networks that follow a transformer architecture. Notable examples are the GPT models from OpenAl (GPT, Generative Pretrained Transformer) e.g. B. GPT-3.5 and GPT-4 used in ChatGPT), PaLM from Google (used in Bard) and LLaMA from Meta, as well as BLOOM, Ernie 3.0 Titan and Claude 2 from Anth-ropic.

For instance, Shirafuji et al. [18] showed that using few-shot prompting, GPT-3.5 could reduce cyclomatic complexity by over 17%, indicating that LLMs can support code clarity at the micro level. However, these improvements are generally limited to isolated functions or cells, with minimal success in transforming interconnected or state-dependent code.

A tool like like Jupyter Al, an official JupyterLab extension, embed LLMs within the notebook interface to suggest code fixes, generate summaries, and automatically reformat or explain code blocks [38].

While LLMs can support localized improvements, complex notebook-to-architecture transformations, they often fall short on tasks requiring long-range reasoning, architectural foresight, and semantic coherence. Multi-agent systems offer a principle solution by distributing orchestrating specialized capabilities and enforcing structure through coordinated communication and iterative feedback.

The effectiveness of multi-agent systems in software engineering hinges on how agents are coordinated. Systems differ significantly in their choice of communication structures and synchronization strategies, which in turn affect scalability, adaptability, and overall performance.

Asynchronous models like HyperAgent [24] support concurrency but may hinder debugging; centralized flows like AgentCoder [23] promote transparency at the cost of flexibility; hierarchical models like SoA [28] scale dynamically but require careful orchestration.

It is an object of the present invention to identify a problem in the prior art and to find a corresponding technical solution for enhancing scalability, adaptability, and code quality through role-based modularity, coordinated interaction mechanisms, intelligent task decomposition, and iterative feedback processes.

### SUMMARY OF THE INVENTION

The above-mentioned objective is achieved by a method and one or more apparatus and/or a system and/or a device according to the features of the independent claims.

Preferred embodiments of the invention are described in the dependent claims. Any combination of the features of the dependent claims to each other and with the features of the independent claims is possible.

An aspect of the invention is a computer-implemented method for transforming notebook-based code into a modular, well-structured and production-ready codebase by using orchestrated multiple LLM-based agents, wherein each agent is dedicated to tasks particularly such as architecture design, code refactoring, and directory structuring, and operates based upon the output of its predecessor by exchanging results of the output through a shared dependency tree derived from static code analysis of the notebook-based code, whereby the final output of the transformation process is said modular, well-structured and production-ready codebase functionally equivalent to the notebook-based code.

Specialized LLM-powered agents in the multi-agent system collaborate on tasks such as architectural planning, code refactoring, and directory structuring. Each agent operates within a defined role and scope, promoting modularity, task specialization, and consistent project-wide reasoning. The multi-agent design ensures that decisions made at one stage, such as naming conventions or design abstractions, can be propagated and validated throughout subsequent phases of the transformation process.

By leveraging generative Al through coordinated, role-specific agents, the inventive approach aims to provide a scalable and maintainable alternative to traditional notebook development pipelines. It transforms ad hoc, exploratory code into well-structured, production-ready software systems.

Notebook-based code can be organized in code cell, whereby each node of the dependency tree represents a code cell and each directed edge denotes a dependency link from one cell to another. The dependency tree preferably serves as communication medium and/or execution context, orchestrating and enabling the agents to collaboratively transform the notebook-based code into the modular, well-structured and production-ready codebase.

A prompt to an agent particularly outlines the agent's task as well as agent's responsibilities. The prompt can comprise the code of a current cell and the code from its parent dependency cells that gives the agent the context for generating the output in response to the prompt, whereby the output is formatted and the formatted output is embedded into the corresponding cell of the dependency tree.

The prompt can comprise the code from the current cell as well as from its dependency cells, and can prepare a complete prompt. The prompt is preferably constructed to provide the LLM with full context for generating a refactored version of the cell.

The steps of the method can be iteratively repeated for every cell in the dependency tree until all cells have been enriched with the corresponding output.

The agents can be combined in a coherent a pipeline where in each stage of the pipeline at least one task of an agent is processed. Each agent can pass its results to the next agent. This supports both traceability and validation.

Depending on their tasks each agent can be equipped with tool-use capabilities including access to output validation tools and/or directory management tools for writing code and/or for running diagnostics. Metrics for validation and feedback loop can be used.

These tools allow agents to validate assumptions, check outputs, and dynamically interact with the system environment. The tools can be further agents for testing and error correction.

According to an embodiment of the invention each agent with access to a validation tool iteratively can call the tool to validate the generated output, whereby, if the output fails validation, the agent can update the prompting accordingly and can retry the output generation until the validation result is confirmed to be both syntactically and semantically correct.

The LLM-based agents can represent an architecture agent dedicated to the task to provide architecture design, a developer agent dedicated to the task to refactor code and a structure agent dedicated to the task to group logically related code segments into appropriate modules and files in a directory.

A further aspect of the invention is a (technical) system/an apparatus for transforming notebook-based code into a modular, well-structured and production-ready codebase, comprising multiple LLM-based agents, wherein each agent is dedicated to tasks particularly such as architecture design, code refactoring, and directory structuring, and comprises at least one processor which is configured to operate based upon the output of its predecessor by exchanging results of the output through a shared dependency tree derived from static code analysis of the notebook-based code, whereby the final output of the transformation process is said modular, well-structured and production-ready codebase functionally equivalent to the notebook-based code.

The processor can steer and/or control and/or load and/or execute method steps of the above mentioned method. The processor can be part of a server or of a runtime environment within the multi-agent system. The multi-agent system can be implemented in software and/or hardware which is used for running/operating and/or controlling a technical system e.g. an industrial machine or device or a robot or any (automated) guided vehicle or medical (imaging) system/device, where errors in the code or unmaintainable, unstructured code often lead to a risk in safety. Errors, indefinite loops and/or deadlock cannot hardly be detected in unstructured, unmaintainable code. If they remain undetected und are not corrected, then such a code implemented on a technical system/device for steering/controlling it can lead to unpredictable behavior, maybe collision of vehicles or a robot with another vehicle/ robot. The system may stuck or crash if absolute robustness and availability is required due to safety reasons. So the transformed well-structured codebase as output reduces errors and other safety risks if the transformed codebase is implemented on such a technical system/device.

Embodiments as described above for the method can be analogously applied for the system and for computer program (product) and for a computer-readable storage and/ provisioning medium.

Systems can be implemented by hardware, firmware and/or software modules or a combination of them.

The computer-readable storage medium stores instructions executable by one or more processors of a computer, wherein execution of the instructions causes the computer system to perform the method. The one or more processors can be distributed organized on servers or in a cloud.

The computer program (product) is executed by one or more processors of a computer and performs the method.

### BRIEF DESCRIPTION OF THE SEVERAL VIEWS OF THE DRAWINGS

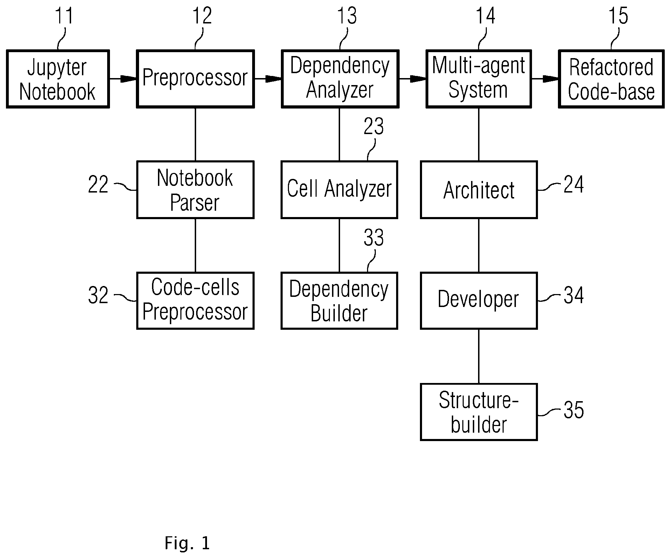

The foregoing and other aspects of the present invention are best understood from the following detailed description when read in connection with the accompanying drawings. For the purpose of illustrating the invention, embodiments that are presently preferred are shown in the drawings, it being understood, however, that the invention is not limited to the specific instrumentalities disclosed. In the figures, identical or functionally identical elements are denoted by identical reference signs. Included in the drawings are the following figures:
The figure shows an example for a workflow the transformation of notebook-based code into a modular codebase using multiple LLM-based agents.

### DETAILED DESCRIPTION OF PREFERRED EXAMPLES/EMBODIMENTS

The figure shows an example for a workflow the transformation of notebook-based code into a modular codebase using multiple LLM-based agents which build a Multi Agent System for Software Architecture (MASA). In the example the agents are coordinated/orchestrated in a framework [3] designed to refactor Jupyter notebooks into modular, production-ready Python codebases. Another notebooks like Google Colab and other resulting code than Python like Javascript or Ruby [4] is possible.

In the following example, the multi agent system is composed of three specialized agents: Architect, Developer, and Structure. These agents operate sequentially and communicate through a shared dependency tree that models the original notebook structure. This tree serves as both the communication medium and the execution context, enabling the agents to collaboratively transform the unstructured notebook into a modular and maintainable Python codebase.

The purpose of this system is to bridge the architectural and structural gap between exploratory Jupyter notebooks and production-grade software systems. Drawing from the limitations outlined in the prior art such as reproducibility issues, hidden dependencies, and lack of modularity, the system introduces an automated pipeline that restructures unmaintainable notebook code into a coherent, scalable codebase. The solution leverages LLMs within a multi-agent framework to support role-specialized reasoning and software architecture transformation, grounded in principles like DRY and SOLID. The DRY (Don't Repeat Yourself) principle emphasizes reducing the repetition of code patterns to promote maintainability and minimize errors, while the SOLID principles, defined as Single Responsibility, Open-Closed, Liskov Substitution, Interface Segregation, and Dependency Inversion, provide a foundation for designing robust and modular object-oriented software architectures. Unlike prior discussed standalone LLM systems that operate in isolation and often overlook architectural cohesion, this system adopts a structured approach in which each agent plays a clearly defined and coordinated role. This mitigates common issues such as shallow abstraction, poor modularity, and inconsistent outputs, all of which have been repeatedly identified in the literature as major barriers to reliable generative development systems.

The figure shows a staged pipeline that processes a Jupyter notebook 11 from raw exploratory code to a modular, executable software project. The transformation is performed through the following stages:
- Preprocessor 12: Combines notebook parsing and code cleaning tasks. The notebook is first ingested using nbformat, where cells are categorized into markdown, code, and output cells to preserve semantic structure. Subsequently, code cells are tokenized and stripped of inline comments to isolate functional logic. This process results in a sequence of sanitized code blocks, prepared for structural analysis.
- Dependency Analyser 13: Each code cell is converted into a cell object that captures metadata such as variable definitions, function calls, and import statements. Using Abstract Syntax Trees (AST) [6], the system identifies semantic elements within each cell and constructs a dependency graph. This graph models inter-cell relationships with the aim of enforcing topological coherence and maintaining architectural integrity.
- Multi-Agent System 14: A coordinated multi-agent framework is employed to transform the analyzed code into a production-ready Python codebase. The system consists of specialized agents Architect 24, Developer 34 and Structure-builder 35 that collaborate sequentially, with each agent building upon the outputs of its predecessor by exchanging results through a shared dependency tree. This communication model mirrors the structured, iterative workflow typical of human software development teams, promoting clarity, modularity, and consistent architectural alignment throughout the transformation pipeline.
- Refactored code base 15: The final output is a structured codebase with logical file segmentation, enhanced modularity, and improved maintainability. This codebase adheres to architectural best practices, ensuring that the system is not only functionally equivalent to the original notebook but also production-ready.
- Notebook Parser 22: utilizes nbformat to deconstruct the notebook into code, markdown, and output components while preserving cell order and index alignment, which are critical for accurate dependency modeling.
- Code-cells Preprocessor 32: cleans code cells through tokenization, removing inline comments while preserving the logical structure. The output is a sequence of sanitized code blocks, prepared for structural analysis. In addition, code cells that contain no executable code or only import statements are identified and flagged for omission.
- Cell Analyzer 23: applies the AST module to extract identifiers, definitions, and usage patterns from each cell. It captures the semantic content of the code, including variable assignments, function definitions, and import statements.
- Dependency Builder 33: compares each analyzed cell to its predecessors to construct a directed acyclic graph (DAG) of dependencies. This graph models the execution order and ensures consistency in data flow and function resolution.
- Architect 24 as Architecture Agent: operates on the dependency tree to define an Architecture Design Record (ADR) [5] for each cell. Each ADR is informed by the DRY principle and system-level design concerns such as modularity and encapsulation.
- Developer 34 as Developer Agent: refactors the code according to the defined ADRs, leveraging contextual information from parent cells. This agent ensures that the transformed code is semantically correct and structurally consistent with the proposed architecture.
- Structure-builder 35 as Structure Agent: analyzes the dependency tree, extracts architectural entities such as functions and classes, and generates a corresponding file system layout. It ensures that related logic is centralized and that the final structure adheres to best practices in project organization.

Through role-specialized agents and structured analysis, the implementation of the system offers a robust mechanism for evolving notebooks into maintainable software architectures.

Parsing and Preprocessing by the Preprocessor 12 in more detail:
Transforming exploratory Jupyter notebooks into structured software architectures begins with systematically parsing their contents and preprocessing the code cells for downstream analysis. This foundational stage preserves semantic integrity, prepares the code for static analysis, and removes noise that could interfere with architectural reasoning or automated refactoring.

Several tools exist for parsing Jupyter notebooks into a programmatically accessible structure, including nbformat [44], Jupyter-Notebook-Parser [45], and Jupytext [11]. Each tool offers distinct capabilities, and their suitability was evaluated based on functionality, ease of integration, and the quality of documentation.

nbformat is preferred as the implementation base. nbformat is the official API for working with Jupyter notebooks. It offers robust functionality, is natively maintained by the Jupyter ecosystem, and supports direct manipulation of notebook elements (code cells, markdown, outputs) without requiring intermediate conversions. It enables direct access to notebook internals, preserves execution order, and integrates well with Python's broader tooling for code analysis. The clarity and extensiveness of its documentation further enhance its maintainability and reproducibility in research settings.

The parsing process is encapsulated in a custom NotebookParser class, which leverages nbformat to load.ipynb files and extract their constituent cells. Upon execution, the parser classifies cells into:
- Markdown Cells: Containing descriptive content, context, and annotations.
- Code Cells: Executable Python code, representing the primary transformation targets.
- Output Cells: Results generated during cell execution (e.g., plots, print statements, exceptions).

Each parsed notebook yields three aligned lists: markdown_cells, code_cells, and output_cells. These lists preserve the execution sequence, enabling accurate alignment between code and its semantic or visual output. They form the foundation for all downstream transformations and analyses by maintaining structural integrity and contextual continuity.

While inline comments are essential for human readability, they introduce noise during structural analysis. For example, comment text can interfere with tokenizers and AST parsers, potentially disrupting dependency resolution or the construction of effective LLM prompts. To ensure accurate semantic modeling, comments are extracted and stored separately.

Tokenization and Comment Filtering Methodology: Code preprocessing is carried out through a dedicated method, extract_inline_comments.
1. Tokenization: Each code cell is tokenized using Python's built-in tokenize module, which enables accurate identification of comment tokens versus executable code.
2. Filtering: All comment tokens are separated and stored in a metadata field within the Cell object, enabling later reintegration or inspection.
3. Reconstruction: The remaining tokens are reassembled into cleaned code strings, stripped of all inline commentary.

The output of this preprocessing phase is a list of cleaned code cells, each represented by an instance of a custom Cell class. This class encapsulates the cleaned code, the original execution index, and extracted comments. These enriched representations support downstream AST parsing, dependency graph construction, and agent-based refactoring while ensuring traceability to the original notebook context.

Transforming exploratory Jupyter notebooks into production-grade software requires understanding the relationships between code cells. Since notebooks are often executed sequentially but depend on implicit global states, dependency analysis is vital to reconstruct an architecture-aware pipeline. This section outlines the methodology used to detect and model inter-cell dependencies.

A central data structure in the implementation is the Cell class, which serves as the building block for constructing a dependency tree. Each code cell from the notebook is encapsulated as a Cell object with the following key attributes:
- Order ID: A unique integer denoting the cell's position in the original notebook.
- Parent: A reference to a preceding Cell object, used during traversal.
- Code: The preprocessed code string without inline comments.
- Analysis Dict: A dictionary containing analysis results such as used and defined variables, called functions, and imports.
- Inline Comments: Extracted commentary from the original code.
- Dependency List: A dynamically populated list of Cell objects on which the current cell depends.

Once all Cell objects are initialized, they are organized into a Directed Acyclic Graph (DAG). The DAG structure is selected because it aligns with the sequential but branching nature of notebook execution. It ensures acyclic, topologically sortable dependencies, which are necessary for deterministic execution and systematic refactoring.

To extract meaningful structural information from each code cell, the implementation uses the Python AST module. Compared to string-based pattern matching techniques such as regular expressions, AST parsing offers significant advantages in reliability, expressiveness, and syntactic correctness.

AST parsing converts code into a tree-based representation of its syntax. This structured approach enables the system to programmatically and accurately distinguish between variable declarations, function definitions, import statements, and function calls, even within complex or nontrivial code blocks. As a result, AST parsing provides a structurally aware, language-compliant interpretation of each code cell, which is essential for downstream tasks such as dependency analysis and refactoring.

The analysis pipeline is orchestrated by the CellAnalyzer class, which performs the following tasks:
1. AST Tree Construction: Each code cell is parsed into an AST tree.
2. Custom Node Visitor: A subclass of ast. NodeVisitor walks the tree and extracts the following elements:
   - defined_variables: Variables defined within the cell.
   - imported_libraries: Libraries or modules imported.
   - used_variables: Variables used but not defined in the same cell.
   - defined_functions: Functions defined within the cell.
   - called_functions: Function calls.
   - called_objects: Libraries used within the cell
3. Scope Handling: The visitor respects local and global scopes to avoid false positives, ensuring only top-level (inter-cell relevant) constructs are captured.

Each of these analysis results is stored in the analysis_dictionary attribute of the corresponding Cell object.

Once all code cells have been analyzed, the DependencyFinder class constructs the actual dependency links between cells. It does this by comparing the used_variables, called_functions, and called_objects of the current cell against the defined_variables, defined_functions, and imported_libraries of all preceding cells. If a match is found, a dependency link is established by appending the matching parent cell to the dependency_list.

This process ensures that each cell is linked only to its relevant predecessors, preserving both semantic correctness and execution order. Special design considerations include:
- Topological Awareness: Dependencies are only established with earlier cells to avoid circularity.
- Multi-parent Support: Cells can have multiple dependencies, reflecting real-world code interlinkage.
- Notebook Order Respect: Even though some dependencies could be restructured, the original cell order guides the analysis to maintain traceability and reproducibility.

The resulting DAG is executable and analyzable, allowing the downstream multi-agent system to operate on semantically isolated and context-aware units of computation. It serves as the foundation for subsequent architectural refactoring and file system generation.

The transformation of a monolithic Jupyter notebook into a modular, maintainable software system is orchestrated through a multi-agent architecture comprising three specialized agents: the Architecture Agent, Developer Agent, and Structure Agent. Each agent is built using, for instance, the GPT-4o model and implemented with the Langgraph Framework [46]. These agents are assigned well-defined roles that reflect common practices in software engineering teams, including architectural planning, implementation, and system organization. This modular structure not only mirrors the human division of labor but also enhances context management and computational efficiency.

Execution begins with the Architecture Agent, which receives the code dependency tree and processes each code cell to produce an Architecture Design Record (ADR). These ADRs encode modularization strategies, highlight redundant code, and suggest abstractions or design patterns based on principles like DRY and SOLID. Once the architectural blueprint is established, the Developer Agent applies the ADRs to refactor the code. By leveraging contextual information from parent cells in the dependency tree, this agent ensures semantic consistency and correctness across refactored units. The output is a transformed set of code cells that conform to architectural specifications.

The final phase is handled by the Structure Agent, which takes the refactored code and constructs a coherent file system. This involves identifying class and function boundaries, grouping related components, and populating a modular directory layout.

This sequential communication protocol, where each agent passes its output to the next, supports traceability and validation. It mitigates context window limitations of individual LLM agents by constraining each task to a manageable scope, while the dependency tree provides a persistent shared representation across all stages.

This design aligns with recent advances in agentic systems, where task decomposition and specialized roles improve both accuracy and maintainability. Compared to a monolithic agent, this framework enables more precise planning, reduced hallucination risk, and enhanced fault tolerance.

Furthermore, employing a multi-agent framework instead of a monolithic single-agent approach offers several technical advantages. First, it enables the modularization of reasoning: each agent specializes in a narrowly scoped task, reducing complexity and lowering the cognitive load that a single agent would otherwise need to manage. This specialization improves precision and helps prevent error propagation. Second, it mitigates the context window limitations inherent in LLMs. Because each agent operates within a bounded scope, the system can handle longer workflows without truncating relevant context. Third, the architecture reflects best practices from human software teams, where different engineers take on responsibilities related to architecture, development, or infrastructure, improving both interpretability and debuggability. In addition, each agent is equipped with tool-use capabilities, including access to validation and directory management tools for writing code or running diagnostics. These tools allow agents to validate assumptions, check outputs, and dynamically interact with the system environment.

The communication between agents is implemented through explicit message passing, where the primary shared structure is the enriched dependency tree. Each node in this tree represents a code cell, and its attributes evolve as it flows through the pipeline: from raw code and dependencies, to architecture plans, to final refactored implementations.

The data structure at the heart of this exchange contains fields such as:
- order: Index of the code cell
- dependency_list: List of parent cell identifiers
- code / refactored_code: Original or transformed code
- ADR: Architecture design decisions (Architect Agent output)

This evolving structure ensures that agents operate with complete contextual awareness while avoiding redundancy. For example, the Developer Agent does not need to perform code analysis or dependency inference, as it inherits both the structural and design metadata directly from the Architect Agent.

Intermediate outputs are essential not only for communication but also for maintaining global coherence. They serve as checkpoints that can be audited, re-used, or rolled back during debugging. Moreover, this separation allows for individual agent POCs (Proof of Concepts) to be tested in isolation, a critical aspect during iterative development.

The structure also enables parallelization. Although the current pipeline is implemented linearly for the sake of traceability and simplicity, the modular design allows certain tasks, such as structure inference or comment reconstruction, to be delegated and executed concurrently. Overall, this agent communication strategy ensures transparency, maintainability, and extensibility, which are fundamental for scalable LLM-assisted software development systems.

Implementation of Agents 24, 34, 35 in more detail:
The Architecture Agent serves as the initial reasoning component in the multi-agent refactoring system. It receives a parsed and preprocessed Jupyter notebook represented as a dependency tree. Each node in this tree corresponds to a code cell and includes metadata such as variable definitions, function usage, and parent-child relationships. The input is provided to the agent iteratively, one cell at a time.

### Input Format:

- The full dependency tree with topologically ordered cells.
- Metadata extracted from the static code analysis.
- Raw code from the current cell and its dependency cells.

### Output Format:

The agent's output is an ADR for each code cell. Each ADR specifies one or more Architecture Design Decisions (ADDs) that detail how the cell should be transformed.

These decisions may include:
- Modularization Strategies: Should the code be encapsulated as a function, class, or kept as procedural logic?
- Naming Conventions: Suggestions for standardizing function, variable, and class names.
- Redundancy Reduction (DRY Principle): Highlighting repeated logic that could be abstracted.
- Responsibility Segregation: Identifying whether logic should be split across modules or refactored into separate units.

Each ADD includes a title, a concise description of the transformation, and an explicit reference to any parent cell dependencies that inform the architectural decision. The output is structured in a consistent, parseable format and linked to the appropriate node in the dependency tree. These ADRs are then injected back into the corresponding cell nodes to guide downstream refactoring.

### Prompting Strategies:

The prompting strategy supplies the agent with both the code from the current cell and the code from its parent dependency cells. It also includes a system prompt that outlines the agent's responsibilities and architectural objectives. The complete prompt includes:
- The full code for the current cell and the complete code for all its parent dependency cells. This gives the agent the necessary context to generate well-informed ADDs grounded in the original logic and dependencies.
- The skeleton structure of the dependency tree to model the relationships between the current node and its dependencies.

The output is formatted, for instance as a structured ADR JSON-like record, which is easily pursuable by the next agent in the pipeline.

Agent Workflow Model: The Architecture Agent operates through a three-node iterative pipeline.
1. Prompt Formatting Node: Receives a cell from the dependency tree and collects its raw code along with the code of its parent dependency cells. This information is formatted and embedded into a well-structured prompt.
2. LLM Node: Processes the prompt using a large language model to generate an ADR tailored to the cell's architectural context and content.
3. Output Formatting Node: The generated ADR is formatted and embedded into the corresponding cell of the dependency tree.

This process is repeated iteratively for every cell in the dependency tree until all cells have been enriched with an ADR. The sequential traversal through the dependency tree enables the agent to maintain coherence across decisions and may emulate the decision-making process of a human software architect.

The Developer Agent receives the dependency tree annotated with the ADRs and iteratively transforms each code cell into a refactored version that adheres to the specified architectural guidelines. This transformation is carried out by integrating the raw code of the current cell, the code of all its parent cells, and the associated ADR into a comprehensive prompt. The agent ensures structural alignment with the architectural vision while maintaining semantic correctness and functional integrity of the original logic. This agent serves as the implementation specialist, converting architectural intent into concrete, maintainable code. The Developer Agent ensures that the new code structure remains consistent with the original logic and that dependencies between cells are preserved.

### Input Format:

- The raw code of the main cell.
- The ADR produced by the Architecture Agent.
- The code of all parent dependency cells.

### Output Format:

- The output is a refactored version of the main cell's code. This new code aligns with the design principles specified in the ADR and is ready for integration into the final codebase.

Validation Strategy: To ensure that the refactored code remains executable and preserves its original behavior, the Developer Agent utilizes the Validation() tool. This linter performs static code analysis and allows the agent to test the code dynamically, detecting errors or other issues during execution. Any exceptions or discrepancies are flagged and corrected iteratively.

Agent Workflow Model: The Developer Agent follows a four-node pipeline.
1. Prompt Formatting Node: Collects the code from the current cell as well as from its dependency cells, along with the associated ADR, and prepares the complete prompt. The prompt is constructed to provide the LLM with full context for generating a refactored version of the cell.
2. LLM Node: Processes the input prompt using the LLM to generate refactored code. The LLM iteratively calls the tool node to validate the generated output. If the code fails validation, the LLM updates the implementation accordingly and retries until the result is confirmed to be both syntactically and semantically correct.
3. Tool Node: The Validation() tool is built using a linter, which checks the code for syntax errors as well as potential code smells.
4. Output Formatting Node: Once a valid implementation is confirmed, this node parses the LLM response, extracts the verified refactored code, and updates the appropriate cell in the dependency tree. This ensures that subsequent agents receive structurally sound and executable code blocks for downstream tasks.

The Structure Agent represents the final stage in the multi-agent pipeline. It organizes the refactored code into a coherent, multi-module structure by leveraging architectural cues and the dependency relationships established in earlier stages.

The primary objective of this agent is to enhance maintainability by grouping logically related code segments into appropriate modules and files, eliminating redundancy, and enforcing best practices in software structure. This includes applying the DRY principle by identifying and consolidating duplicated functions and classes across cells, as well as constructing a scalable directory layout that improves code readability and promotes reuse.

### Input Format:

- The fully annotated dependency tree, with refactored code blocks.

### Output Format:

- The output is a directory-based file system that mirrors the architectural structure derived from the dependency tree. Each file is populated with code corresponding to logically grouped cells.

### Codebase Generation Tools:

- write_file: Used to create and write content to files.
- read_file: Used to read content from files.
- list_directory: Allows the agent to navigate and verify the directory structure.
- fetch_code: Dynamically retrieves specific code blocks from the dependency tree based on cell identifiers.

The Structure Agent workflow is organized into six nodes.
1. Definitions Extraction Node: In this initial step, the agent traverses each node in the annotated dependency tree and analyzes its associated refactored code to identify structural elements such as function definitions and class declarations. By systematically extracting these elements, the agent creates a semantic index of the codebase, which serves as a foundational input for downstream architectural reasoning. This index provides a high-level overview of the logical components available across all cells and informs subsequent decisions about how to group, modularize, and organize the code.
2. File Structure Prompt Formatting Node: This node takes the extracted class and function definitions from the previous step and embeds them into a refined prompt format. The prompt augments the initial skeleton of the dependency tree with architectural context and semantic metadata. The resulting enriched prompt is then used as input for the file structure generation stage, ensuring that downstream agents have the structural context necessary to make coherent decisions about file organization and module assignment.
3. File Structure LLM Node: Receives the structured prompt and applies architectural reasoning to construct a directory layout. It uses the tool node to instantiate this layout physically within the specified directory. The output is a dictionary-based representation of the directory structure.
4. Directory Structure Tools Node: Uses the file management tools write_file and list_directory to provide the agent with access to the directory, enabling it to write files or list the available files within the directory.
5. Code Population Prompt Node: This node receives the dictionary-based file structure generated by the File Structure LLM node and translates it into a detailed prompt. The prompt explicitly maps file paths to their corresponding content types and outlines the responsibilities of each module. It provides the Population Agent with precise guidance on where specific pieces of code should reside within the directory hierarchy, enabling informed and structured file population in the subsequent step.
6. Population LLM Node: This LLM processes the prompt enriched with cell-to-file mappings. It leverages the population tools node to retrieve the actual refactored code from the dependency tree. For each file, the agent iteratively fetches relevant code cells, validates their content for duplication, and ensures logical grouping. It then writes the code to the designated files. During this process, the agent performs semantic checks to identify similar or repeated logic and consolidates it, thereby enforcing the DRY principle while maintaining execution correctness and preserving architectural coherence. Finally, the agent validates that each file is free from syntax errors and code smells.
7. Population Tools Node: The tools write_file, read_file, fetch_code, and validate provide the agent with the ability to write to files in the directory, read from those files, retrieve code from the dependency tree, and validate the files for correctness.

The resulting codebase reflects a coherent architectural transformation from a loosely structured notebook into a production-ready software system. It aligns with best practices in software engineering by incorporating modular design, explicit dependency management, and a clear separation of concerns. Moreover, the system's structured output ensures improved readability, reusability, and long-term maintainability, which are key attributes for collaborative development and continuous integration workflows. The primary goal of an evaluation is to assess the architectural and structural improvements introduced by the proposed multi-agent refactoring system. Unlike conventional approaches that focus solely on functional correctness or superficial style adjustments, this evaluation aims to quantify enhancements in modularity, cohesion, complexity, and overall maintainability. Additionally, to ensure that these improvements do not compromise the original logic, the output produced by the refactored codebase is validated that it yields the same results as the original Jupyter notebook.

To support a robust and reproducible assessment of software quality, this study employs a suite of static analysis tools commonly used in code quality evaluation. These tools enable objective measurement of structural and maintainability attributes of the refactored codebase. The tools used are radon and pylint, each providing complementary insights into the internal structure and design quality of the transformed notebooks.

The effectiveness of the multi-agent refactoring system was first assessed using three established software quality metrics: Maintainability Index (MI), Cyclomatic Complexity (CC), and Pylint Score.

To evaluate whether the outputs of the refactored codebase preserve the same computational semantics as the original notebook, a semantic similarity metric is computed using sentence embeddings. This is achieved through a pre-trained sentence transformer model, which encodes the outputs of both the original and refactored notebooks into high-dimensional vector representations. Since the refactoring process alters the structural composition and ordering of outputs, a token-based bag-of-words embedding strategy is employed. Rather than relying on the sequential arrangement of tokens, this method tokenizes the inputs and evaluates similarity based on the aggregated token-level representation.

The invention has been described in detail with reference to embodiments thereof and examples. Variations and modifications are possible. Instead of the above-described production process one or more processes can analogously be applied to other technical systems.

The multi agent system and its parts can be (computer-) implemented for performing the inventive method steps.

Parts of the (computer) system can be integrated into a (computer) cloud system. It includes one or more processors and can be coupled with data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the systems and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

### References:

[1] https://jupyter.org/
[2] https://colab.google/
[3] https://en.wikipedia.org/wiki/Software framework
[4] https://en.wikipedia.org/wiki/Ruby_(programming language)
[5] https://github.com/joelparkerhenderson/architecture-decision-record
[6] https://en.wikipedia.org/wiki/Abstract_syntax_tree
[11] M. Wouts. Jupytext: Jupyter Notebooks as Markdown Documents or Python Scripts. https: //github.com/mwouts/jupytext. Accessed: 2025-04-22. 2019.
[14] D. Koop and J. Patel. "Dataflow Notebooks: Encoding and Tracking Dependencies of Cells". In: TaPP 2017. 2017. url: https://www.usenix.org/conference/tapp17/workshop-program/presentation/koop.
[18] A. Shirafuji, Y. Oda, J. Suzuki, M. Morishita, and Y. Watanobe. "Refactoring Programs Using Large Language Models with Few-Shot Examples". In: 2023 30th Asia-Pacific Software Engineering Conference (APSEC). IEEE, Dec. 2023, pp. 151-160. doi: 10.1109/ apsec60848.2023.00025. url: http://dx.doi.org/10.1109/APSEC60848.2023.00025.
[23] D. Huang, J. M. Zhang, M. Luck, Q. Bu, Y. Qing, and H. Cui. AgentCoder: Multi-Agentbased Code Generation with Iterative Testing and Optimisation. 2024. arXiv: 2312.13010 [cs.CL]. url: https://arxiv.org/abs/2312.13010.
[24] H. N. Phan, T. N. Nguyen, P. X. Nguyen, and N. D. Q. Bui. HyperAgent: Generalist Software Engineering Agents to Solve Coding Tasks at Scale. 2024. arXiv: 2409.16299 [cs.SE]. url: https://arxiv.org/abs/2409.16299.
[28] Y. Ishibashi and Y. Nishimura. Self- Organized Agents: A LLM Multi-Agent Framework toward Ultra Large-Scale Code Generation and Optimization. 2024. arXiv: 2404.02183 [cs.SE]. url: https://arxiv.org/abs/2404.02183.
[38] J. Weill. Generative AI in Jupyter. Accessed: 2025-03-28. Aug. 2023. Url: https://blog. jupyter.org/generative-ai-in-jupyter-3f7174824862.
[44] J. D. Team. nbformat: Jupyter Notebook format support library. https://github.com/ jupyter/nbformat. Accessed: 2025-04-22. 2015.
[45] T. Wojcik. Jupyter Notebook Parser: Parse Jupyter Notebooks as Python ASTs. https:// github.com/tomwojcik/jupyter-notebook-parser. Accessed: 2025-04-22. 2021.
[46] LangChain Al. LangGraph: Build resilient language agents as graphs. https://github.com/ langchain-ai/langgraph. Accessed: 2025-04-22. 2024.

## Claims

1. Computer-implemented method for transforming notebook-based code into a modular, well-structured and production-ready codebase by using orchestrated multiple LLM-based agents (14), wherein each agent (24, 34, 35) is dedicated to tasks particularly such as architecture design, code refactoring, and directory structuring, and operates based upon the output of its predecessor by exchanging results of the output through a shared dependency tree derived from static code analysis of the notebook-based code, whereby the final output of the transformation process is said modular, well-structured and production-ready codebase (15) functionally equivalent to the notebook-based code.

2. Method according to the previous claim, wherein the notebook-based code is organized in code cell, whereby each node of the dependency tree represents a code cell and each directed edge denotes a dependency link from one cell to another.

3. Method according to any of the previous claims, wherein the dependency tree serves as communication medium and execution context, enabling the agents to collaboratively transform the notebook-based code into the modular, well-structured and production-ready codebase.

4. Method according to any of the preceding claims, wherein a prompt to an agent outlines the agent's task as well as agent's responsibilities and comprises the code of a current cell and the code from its parent dependency cells that gives the agent the context for generating the output in response to the prompt, whereby the output is formatted and the formatted output is embedded into the corresponding cell of the dependency tree.

5. Method according to the previous claim, wherein steps of the method are iteratively repeated for every cell in the dependency tree until all cells have been enriched with the corresponding output.

6. Method according to any of the preceding claims, wherein the agents are combined in a coherent a pipeline (12, 13, 14, 15) where in each stage of the pipeline at least one task of an agent is processed.

7. Method according to any of the preceding claims, wherein depending on their tasks each agent is equipped with tool-use capabilities including access to output validation tools and/or directory management tools for writing code and/or for running diagnostics.

8. Method according to the previous claim, wherein each agent with access to a validation tool iteratively calls the tool to validate the generated output, whereby, if the output fails validation, the agent updates the prompting accordingly and retries the output generation until the validation result is confirmed to be both syntactically and semantically correct.

9. Method according to any of the preceding claims, the LLM-based agents (14) represent an architecture agent (24) dedicated to the task to provide architecture design, a developer agent (34) dedicated to the task to refactor code and a structure agent (35) dedicated to the task to group logically related code segments into appropriate modules and files in a directory.

10. A system for transforming notebook-based code into a modular, well-structured and production-ready codebase, comprising multiple LLM-based agents (14), wherein each agent (24, 34, 35) is dedicated to tasks particularly such as architecture design, code refactoring, and directory structuring, and comprises at least one processor which is configured to operate based upon the output of its predecessor by exchanging results of the output through a shared dependency tree derived from static code analysis of the notebook-based code, whereby the final output of the transformation process is said modular, well-structured and production-ready codebase (15) functionally equivalent to the notebook-based code.

11. A system according to the previous claim, wherein the LLM-based agents represent an architecture agent dedicated to the task to provide architecture design, a developer agent dedicated to the task to refactor code and a structure agent dedicated to the task to group logically related code segments into appropriate modules and files in a directory.

12. A system according to any of the previous system claims, wherein the dependency tree serves as communication medium and execution context, enabling the agents to collaboratively transform the notebook-based code into the modular, well-structured and production-ready codebase.

13. A system according to any of the preceding system claims, the LLM-based agents (14) represent an architecture agent (24) dedicated to the task to provide architecture design, a developer agent (34) dedicated to the task to refactor code and a structure agent (35) dedicated to the task to group logically related code segments into appropriate modules and files in a directory.

14. A computer program product comprising instructions which, when the program is executed by a computer, cause the computer to carry out a method according to one of the method claims.

15. A provisioning device for the computer program product according to the preceding claim, wherein the provisioning device stores and/or provides the computer program product.
